# EUROPEAN PATENT APPLICATION

(11) **EP 4 491 576 A1**
(43) Date of publication of application: **15.01.2025**
(21) Application number: 23767187.0
(22) Date of filing: 09.03.2023
(51) Int. Cl.: C01D 15/02, C22B 3/22

(54) **METHOD FOR RECOVERING NICKEL, COBALT, AND LITHIUM FROM DISCARDED SAGGER**

(30) Priority: 11.03.2022 KR 20220030763
(71) Applicant: Koreaseparation Co., Ltd., Donghae-si Gangwon-do 25799 (KR)
(72) Inventor: SONG, Won Hong, Seoul 04780 (KR)
(74) Representative: BCKIP Part mbB
(86) International application number: PCT/KR2023/003226
(87) International publication number: WO 2023/172086

(57) **Abstract**

The present invention has the advantage of recovering high-purity lithium hydroxide from a discarded sagger that is to be scrapped, by pulverizing the discarded sagger and then recovering nickel oxide and cobalt oxide, which are positive electrode active materials, through wet magnetic separation, and removing impurities through Al and Si precipitation reactions and evaporative concentration. Therefore, by using the method for recovering a positive electrode active material and lithium hydroxide from a discarded sagger according to the present invention, high value-added lithium and positive electrode active materials may be recovered and recycled from a discarded sagger that is scrapped during the manufacturing process of lithium secondary batteries and thus the method is expected to reduce the manufacturing costs of lithium secondary batteries.

## Description

### TECHNICAL FIELD

The present invention relates to a method for recovering a positive electrode active material and lithium hydroxide from a discarded sagger.

### BACKGROUND ART

Positive electrode active materials of lithium-ion secondary batteries are synthesized through a method of firing lithium-containing complex oxide at high temperatures. When the lithium-containing complex oxide comes into direct contact with flames, ash, or smoke during the high-temperature firing process, the synthesized positive electrode active materials exhibit degraded quality. Therefore, the lithium-containing complex oxide is prepared by being placed into a sagger, which is a refractory container exhibiting excellent thermal conductivity, and then subjected to high-temperature firing.

The sagger used for producing positive electrode active materials is made of an oxide ceramic mainly composed of SiO₂, Al₂O₃, and MgO. The sagger for producing positive electrode active materials, when exposed to repeated high-temperature firing of the lithium-containing complex oxide, has a surface eroded by lithium hydroxide or lithium carbonate formed during the high-temperature firing process, and the eroded area is deposited with the synthesized positive electrode active material along with lithium hydroxide and lithium carbonate. Eventually, the sagger, eroded by lithium hydroxide or lithium carbonate, experiences a decrease in heat resistance and is ultimately discarded as a discarded sagger.

The annual output of discarded saggers in Korea is estimated to be around 30,000 tons. However, with an increasing demand for lithium-ion secondary batteries resulting from the widespread adoption of mobile devices and electric vehicles, the output of discarded saggers is expected to increase rapidly.

Therefore, high value-added positive electrode active materials such as nickel and cobalt, and lithium, which are deposited in the eroded areas of discarded saggers discarded due to degraded thermal resistance from repeated high-temperatures firing of the lithium-containing complex oxide, when recovered, may be recycled for the production of lithium-ion secondary batteries, leading to cost savings.

### DISCLOSURE OF THE INVENTION

### TECHNICAL PROBLEM

The present invention provides a cost-effective and efficient method for recovering high value-added compounds such as lithium, nickel, and cobalt from a discarded sagger used in the production of positive electrode active materials, which is discarded due to erosion caused by repeated use of lithium hydroxide, lithium carbonate, and the like.

Other tasks and technical features of the present invention are more specifically presented in the detailed description of the invention, the claims, and the drawings below.

### TECHNICAL SOLUTION

A method for recovering a positive electrode active material and lithium hydroxide from a discarded sagger includes a first process of subjecting a discarded sagger to wet pulverization and subsequent solid-liquid separation, a second process of subjecting a solid obtained from the solid-liquid separation to wet magnetic separation to recover a positive electrode active material, and

a third process of subjecting a filtrate obtained from the solid-liquid separation to Al and Si precipitation reactions and evaporative concentration to recover lithium hydroxide.

The wet pulverization may involve dry pulverizing the discarded sagger and then performing wet ball milling to obtain finely pulverized discarded sagger having a particle size of 200 mesh or less.

The wet magnetic separation may involve preparing iron oxide and iron scale as magnetic materials through a first wet magnetic separation, and then performing a second wet magnetic separation on non-magnetic materials from the first wet magnetic separation, thereby recovering a positive electrode active material as a magnetic material, and the Al and Si precipitation reactions may involve mixing hydroxide of alkaline earth metal and an additive with the filtrate obtained from the solid-liquid separation to precipitate a soluble aluminum compound of aluminate as an insoluble material such as calcium aluminum silicate hydrate or ettringite and precipitate a soluble silicon-containing compound as an insoluble material such as calcium silicate hydrate.

The evaporative concentration may involve performing the evaporative concentration on the filtrate obtained from the Al and Si precipitation reactions and the subsequent solid-liquid separation of the filtrate obtained from the solid-liquid separation, thereby recovering lithium hydroxide, and controlling an atmosphere using an inert gas such as nitrogen to prevent purity degradation caused by the formation of lithium carbonate resulting from a reaction with carbon dioxide in the air.

### ADVANTAGEOUS EFFECTS

The present invention has the advantage of recovering high-purity lithium hydroxide from a discarded sagger that is to be scrapped, by pulverizing the sagger and then recovering nickel oxide and cobalt oxide, which are positive electrode active materials, through wet magnetic separation, and removing impurities from the recovered nickel oxide and cobalt oxide through Al and Si precipitation reactions and evaporative concentration. Therefore, by using the method for recovering positive electrode active materials and lithium hydroxide from a discarded sagger according to the present invention, high value-added lithium and positive electrode active materials may be recovered and recycled from a discarded sagger that is scrapped during the manufacturing process of lithium secondary batteries, and thus the method is expected to reduce the manufacturing costs of lithium secondary batteries.

### BRIEF DESCRIPTION OF THE DRAWINGS

FIG. 1 schematically shows a method for recovering a positive electrode active material and lithium hydroxide from a discarded sagger according to the present invention;
FIG. 2 shows analysis results on mineral phases of an erosion layer of a discarded sagger used for sintering NCA(LiNi_{0.8}Co_{0.15}Al_{0.05}), where the erosion layer is mainly composed of Li₄SiO₄, LiAlO₂, LiAlSi₂O₆, and Li₂CO₃ according to the present invention;
FIG. 3 shows analysis results on mineral phases of a pulverized discarded sagger used for sintering NCA(LiNi_{0.8}Co_{0.15}Al_{0.05}), where the discarded sagger is mainly composed of Al₂O₃ with additional mineral phases including Li_{0.6}Al_{0.6}Si_{2.4}O₆, Al₆Si₂O₁₃, SiO₂, MgAl₂O₄, and Mg₂Al₄Si₅O₁₈ according to the present invention; and

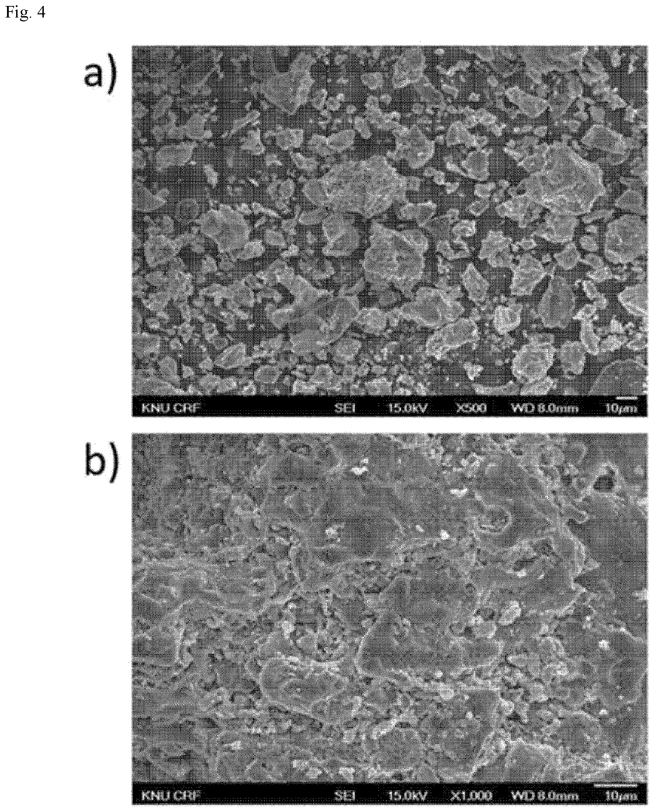

FIG. 4 shows scanning electron microscope images of a sagger and an erosion layer according to the present invention.

### MODE FOR CARRYING OUT THE INVENTION

The present invention provides a method for recovering a positive electrode active material and lithium hydroxide from a discarded sagger, which includes a first process of subjecting a discarded sagger to wet pulverization and subsequent solid-liquid separation, a second process of subjecting a solid obtained from the solid-liquid separation to wet magnetic separation to recover a positive electrode active material, and
a third process of subjecting a filtrate obtained from the solid-liquid separation to Al and Si precipitation reactions and evaporative concentration to recover lithium hydroxide.

The discarded sagger is a sagger for firing and synthesizing a positive electrode active material and is a ceramic mainly composed of SiO₂, Al₂O₃, and MgO.

The wet pulverization involves ball milling, and the wet pulverization is preferably performed after the sagger is coarsely pulverized to a size of 0.5 to 10 mm through dry pulverization. The wet pulverization involves performing fine pulverization to obtained a fine powder of 200 mesh or less through ball milling, and the resulting wet-pulverized material is separated into solid and liquid through solid-liquid separation.

The solid obtained from the solid-liquid separation is recovered as a positive electrode active material through wet magnetic separation. The positive electrode active material includes an oxide of lithium-nickel-cobalt. The wet magnetic separation includes a first wet magnetic separation and a second wet magnetic separation, and the first wet magnetic separation employs a magnetic flux density of 100 to 500 Gauss to remove iron, iron oxide, iron scale, and the like as magnetic materials. Preferably, the first wet magnetic separation employs a magnetic flux density of 100 to 200 Gauss to remove iron, iron oxide, iron scale, and the like as magnetic materials. The second wet magnetic separation involves employing a magnetic density of 25,000 to 30,000 Gauss to recover the positive electrode active material as a magnetic material and recover alumina and aluminosilicate as non-magnetic materials, and preferably, the second wet magnetic separation involves using a separator having a magnetic density of 20,000 Gauss or greater.

The present invention involves subjecting a filtrate obtained from the solid-liquid separation to Al and Si precipitation reactions and evaporative concentration to recover lithium hydroxide. The Al and Si precipitation reactions involve mixing hydroxide of alkaline earth metal and gypsum with the filtrate obtained from the solid-liquid separation to precipitate soluble Al(OH)₄⁻ as insoluble calcium aluminum silicate hydrate or ettringite and precipitate soluble SiO₄²⁻ as insoluble calcium silicate hydrate.

The evaporative concentration involves performing the evaporative concentration on the filtrate obtained from the Al and Si precipitation reactions and the subsequent solid-liquid separation of the filtrate obtained from the solid-liquid separation, thereby recovering lithium hydroxide.

The evaporative concentration includes three stages: first, second, and third evaporative concentration. First, the first evaporative concentration is a process for removing impurities containing calcium hydroxide, calcium carbonate, aluminum hydroxide, and silicon dioxide, and may include a portion of lithium hydroxide and lithium carbonate. The first evaporative concentration is preferably performed until 0.5 to 5% of lithium hydroxide is precipitated.

The second evaporative concentration is a process for precipitating lithium hydroxide, and is preferably performed until 50 to 80% of the lithium hydroxide is precipitated, using the liquid obtained from the solid-liquid separation of the concentrate prepared through the first evaporative concentration. The precipitated lithium hydroxide is washed, filtered, and dried, and the lithium hydroxide recovered therefrom has a purity of 99.9% or greater.

The third evaporative concentration is a process for returning lithium hydroxide that is not precipitated in the second evaporative concentrations to the first evaporative concentration to enhance a recovery rate of lithium hydroxide. The third evaporative concentration is preferably performed until 90 to 95% of the lithium hydroxide is precipitated, using the liquid obtained from the solid-liquid separation of the concentrate prepared through the second evaporative concentration. The lithium hydroxide obtained as a solid through the solid-liquid separation after the second evaporative concentration, which may contain impurities and have low purity, is redissolved in the filtrate for the first evaporative concentration to be precipitated as high-purity lithium hydroxide in the second evaporative concentration. In addition, the filtrate obtained as a liquid through the solid-liquid separation after being used for washing the high-purity lithium hydroxide obtained after the second evaporative concentration is added to Al and Si precipitation reaction solutions and reused in the lithium hydroxide recovery process.

### MODE FOR CARRYING OUT THE INVENTION

Hereinafter, the method for recovering a positive electrode active material and lithium hydroxide from a discarded sagger according to the present invention will be described in detail.

### 1) Analysis of discarded sagger

A discarded sagger of the present invention may be a sagger used in the firing of a positive electrode active material for a secondary battery and then discarded, and may be a ceramic mainly composed of SiO₂, Al₂O₃, and MgO as a container for the firing of a positive electrode active material.

Table 1 shows the results of analyzing the composition of a discarded sagger used in the firing of NCA(LiNi_{0.8}Co_{0.15}Al_{0.05}) through X-ray fluorescence analysis (XRF) and atomic absorption spectrometry.

**[Table 1]**

| Analysis method (XRF, low temperature AA as Li) | |
|---|---|
| Item | Amount (%) |
| Li2O(as Li) | 3.23(1.50) |
| NiO | 0.20 |
| Co3O4 | 0.02 |
| SiO2 | 50.21 |
| Al2O3 | 38.90 |
| CaO | 0.50 |
| MgO | 5.62 |
| Fe2O3 | 0.35 |
| Na2O | 0.33 |
| K2O | 0.31 |
| etc. | 0.33 |

The analysis results show that lithium (Li) content is high at 1.5%, which is equivalent to about 8.0% when converted to lithium carbonate content. In addition, cobalt content is about 0.2%, which is considered worth recovering.

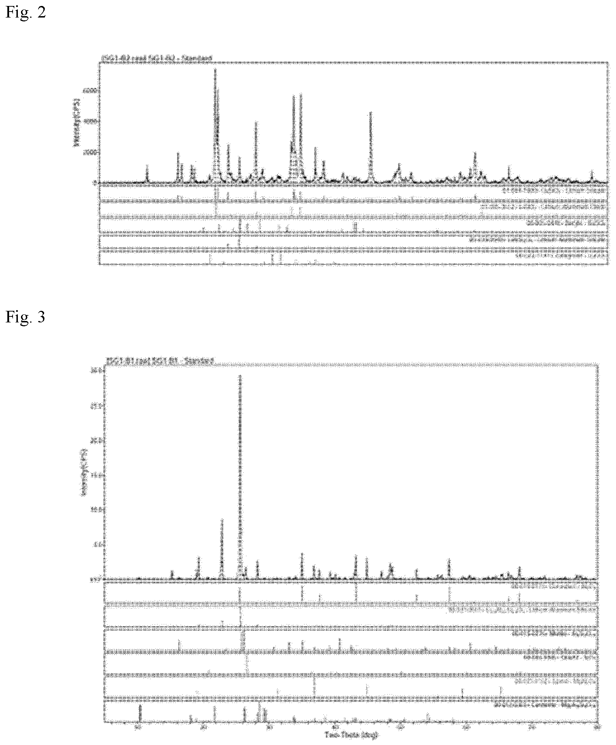

FIGS. 2 and 3 show the results of X-ray diffraction analysis of mineral phases of a discarded sagger used in the sintering of NCA(LiNi_{0.8}Co_{0.15}Al_{0.05}). FIG. 2 is the analysis result of a surface of a sagger, that is, a portion in contact with a positive electrode active material, where diffraction lines of lithium silicate, lithium aluminum oxide, lithium aluminum silicate, and lithium carbonate are well observed, but the positive electrode active material is present in a small amount and exhibits poor crystallinity, and accordingly, no distinct diffraction lines are observed.

FIG. 3 is an X-ray diffraction pattern of analyzing mineral phases of a sample in which a discarded sagger is completely pulverized and mixed, that is, the entire discarded sagger. The sagger contains mullite, cordierite, alumina, quartz, and spinel as raw materials of the sagger inside thereof, and has diffraction lines of lithium aluminum silicate, likely formed through reactions with lithium penetrating from a surface, observed.

### 2) Process for treating discarded sagger

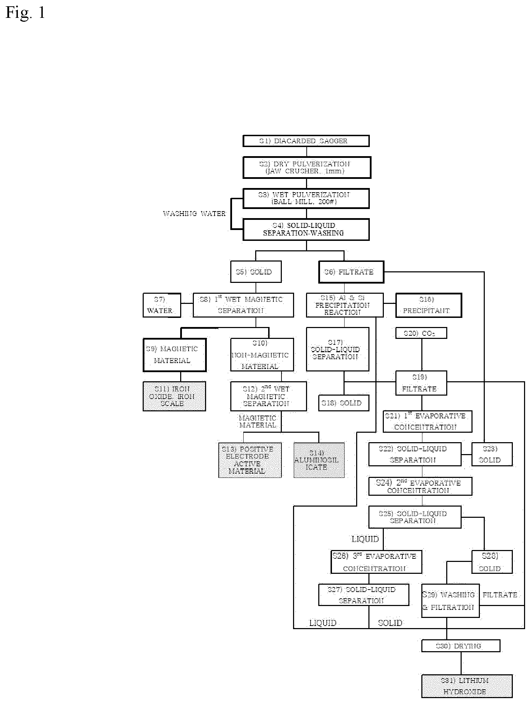

FIG. 1 shows a process for separating iron oxide, iron scale, a positive electrode active material, aluminosilicate, and lithium hydroxide from a discarded sagger according to the present invention. In particular, through the process for treating discarded sagger according to the present invention, high-purity lithium hydroxide monohydrate having a purity of 99.9% or greater may be obtained.

### (1) Process for pulverizing discarded sagger

First, a discarded sagger S1 is pulverized into a powder of 200# or less. Pulverizing the discarded sagger all at once may result in reduced pulverization efficiency, and accordingly, it is preferable to perform a first process of dry pulverization S2 to coarsely grind the discarded sagger to a size of 1 mm or less and then a second process of wet pulverization S3 to finely grind the discarded sagger to a size of 200# or less. In large-scale processing operations that prioritize pulverization efficiency over initial investment costs, it is desirable to place jaw crushers and impact mills (or hammer mills) in series and controlling the particle size of a pulverized product to 1 mm or less.

The discarded sagger has relatively high compressive strength but is weak against impact. When pulverization efficiency is the only factor to be considered, an impact crusher alone may be used without multiple processes. However, parts of the impact crusher may easily wear out from crushing due to the fact that crushed particles have sharp edges with high hardness, and this may result in rising crushing costs.

Therefore, in the present invention, as a first process, dry crushing S2 is performed using a jock crusher whose parts are easy to replace and inexpensive, and then as a second process, wet ball milling is used for fine pulverization. In particular, the wet ball milling provides a benefit of extracting lithium during the fine pulverization process of a discarded sagger.

It is preferable that a ball milling machine used for the wet crushing S3 is configured such that a coarsely pulverized discarded sagger slurry, in which water and a coarsely pulverized discarded sagger material is mixed, is fed from one end and a slurry containing finely pulverized particles is discharged from the other end. In addition, it is preferable that the processed slurry is passed through an 200# sieve, and particles having a size of 200# or greater are returned to an inlet.

It is preferable to prepare the coarsely pulverized discarded sagger slurry by mixing 100 to 1,000 parts by weight of water with respect to 100 parts by weight of the coarsely pulverized discarded sagger material. When the amount of water contained in the coarsely pulverized discarded sagger slurry is less than 100 parts by weight, the viscosity of the slurry is too high, leading to both reduction in efficiency of fine pulverization through ball milling and reduction in leaching rate of lithium. When the amount of water contained in the coarsely pulverized discarded sagger slurry is greater than 1,000 parts by weight, energy costs in the subsequent concentration process are rising. Preferably, the coarsely pulverized discarded sagger slurry is prepared by mixing 200 to 500 parts by weight of water with respect to 100 parts by weight of the coarsely pulverized discarded sagger material. The retention time of the coarsely pulverized discarded sagger slurry in the ball mill is preferably 10 to 120 minutes. When the retention time is less than 10 minutes, the leaching rate of lithium and the efficiency of fine pulverization are reduced, and when the retention time is greater than 120 minutes, an unnecessary increase in energy costs is caused.

### (2) Solid-liquid separation process of finely pulverized discarded sagger slurry

The finely pulverized discarded sagger slurry is separated into a solid S5 and a filtrate S6 through solid-liquid separation S4. The solid S5 includes a refractory composition including a positive electrode active material and iron oxide, iron scale, aluminosilicate, alumina, and the like, and the filtrate S6 corresponds to a lithium leachate in which lithium, aluminum, and silicon are dissolved. The solid-liquid separation may use a sedimentation tank, a filter press, a screw filter, a centrifuge, and the like, and a combination of two or more of these may increase efficiency thereof. A portion of lithium may be leached out of the solid S5. Therefore, the solid S5 is washed with clean water to minimize the loss of lithium, and the water (washing water) used for the washing is reused as water for ball milling of the wet pulverization S3.

### (3) Wet magnetic separation process

The solid S5 includes a positive electrode active material S13 and refractory compositions S11 and S14, and lithium and aluminum silicon are present in the filtrate in the form of Li⁺, OH⁻, Al(OH)₄⁻, or SiO₄²⁻. The solid S5 undergoes magnetic separations S8 and S12 to recover iron oxide, iron scale, and a positive electrode active material; alumina and aluminosilicate as refractory compositions remain as residues; and the filtrate S6 undergoes a process of Al and Si precipitation removal S15 to recover lithium hydroxide.

The magnetic separation includes a first wet separation process S8 and a second wet magnetic separation process S12. The water used in the wet magnetic separation process is sufficient if it is of the same quality as industrial water, and the water used in the process may also be reused. The solid S5 obtained from the solid-liquid separation process S4 is prepared as a solid slurry by adding water such that the solid concentration reaches 1 to 10%, and is then fed into the first wet magnetic separation process S8.

The first wet magnetic separation process S8 is designed to remove iron oxide, iron fragments, and iron scale introduced by crusher wear. A magnetic material S9 of the first wet magnetic separation process S8 is iron oxide and iron scale. These are very strongly attracted to a magnet, and thus may be sufficiently removed even with a magnet having a magnetic flux density of 100 to 500 Gauss. In this case, the magnetic material S9 recovered at 200 Gauss or less is mostly iron oxide and iron scale, but when the magnetic flux density is greater than 200 Gauss, a proportion of the positive electrode active material S13 introduced in the magnetic material S9 may increase. The iron oxide and iron scale S11 recovered through the first wet magnetic separation process S8 are dehydrated and stored in a separate place.

The second wet magnetic separation process S12 of the present invention is designed to recover the positive electrode active material S13 containing nickel oxide, cobalt oxide, and the like, from a non-magnetic material S10 of the first wet magnetic separation process S8. Given that the positive electrode active material S13 is weakly magnetic or paramagnetic, a magnet having a high magnetic flux density is required to recover the materials as magnetic materials. The recovery of the positive electrode active material S13 in the second wet magnetic separation process S12 of the present invention is best achieved using a magnetic medium exhibiting a magnetic flux density of 10,000 and 30,000 Gauss. However, some positive electrode active materials such as LCO and NCM are strongly attracted to magnets, and accordingly, when only these are to be recovered, a magnet having a magnetic flux density of 2,000 Gauss may be sufficient.

It is preferable that a magnetic separator used in the second wet magnetic separation process S12 has a structure in which a slurry containing particles to be separated is passed through a magnetized magnetic medium. In this case, it is preferable to prepare and use the solid S5 and the non-magnetic material S10 as a slurry having a concentration of 1 to 10%. When the solid concentration of the slurry is less than 1%, an increase amount of water requires an additional storage tank and energy costs increase, and when the concentration is greater than 10%, separation efficiency is significantly reduced.

### 4) Al(OH)₄ and SiO₄²⁻ precipitation process

The filtrate S6 obtained through solid-liquid separation S4 of the pulverized sagger material contains Li⁺, OH⁻, Al(OH)₄⁻, SiO₄²⁻, and the like. Therefore, when the filtrate S6 is mixed with an alkaline earth metal hydroxide such as calcium hydroxide or magnesium hydroxide and gypsum, soluble Al(OH)₄⁻ and SiO₄²⁻ are precipitated as insoluble calcium silicate hydrate (CSH), calcium aluminum silicate hydrate (CASH), and ettringite by pozzolanic reactions. The preferred temperature for the Al and Si precipitation reaction S15 is 50 to 80 °C and the time is 30 to 120 minutes. The Al and Si precipitation reaction S15 is highly sensitive to the reaction temperature, and the higher the temperature, the faster the reaction rate. For example, when the Al and Si precipitation reaction S15 is performed at a temperature below 20 °C, it takes 6 hours or more to complete the reaction and the resulting product has a very fine particle size, making solid-liquid separation challenging. At 50 °C, the Al and Si precipitation reaction S15 is completed within 2 hours and at 80 °C, the reaction is completed within 30 minutes. When the Al and Si precipitation reaction S15 is performed at around 100 °C, the reaction is completed within 10 minutes, but energy loss takes place due to water evaporation.

As a precipitant S16 used in the precipitation reaction of the above Al and Si precipitation reaction S15, alkaline earth metal hydroxide is used, and calcium hydroxide is preferably used. The amount of the precipitant S16 to be added is determined by the amount of Al(OH)₄⁻ and SiO₄²⁻ present in a solution, and it is preferable to add 1 to 2 equivalents of calcium hydroxide required to form calcium silicate hydrate (CSH) and calcium aluminum silicate hydrate (CASH). When the calcium hydroxide is added in an amount less than the equivalent amount, the amount of Al(OH)₄⁻ and SiO₄²⁻ that are not removed in the solution increases, and when the calcium hydroxide is used in excess of 2 equivalents, process costs increase. It is appropriate to add gypsum in an amount that is 0.5 to 1 times the amount of calcium hydroxide.

Additives such as calcium hydroxide and gypsum may be added in the wet ball milling process. This approach offers benefits such as a higher lithium leaching rate and a simpler process, but it may lead to decreased magnetic separation efficiency and hardened sludge, making it challenging to process.

### (5) Solid-liquid separation process for Al and Si precipitation reaction products

Solid-liquid separation S17 is performed on reaction products of Al and Si precipitation reaction S15, and accordingly, a solid S18 and a filtrate S19 are separated. The solid S18 contains insoluble CSH, CASH, and ettringite, which are reaction products of Al and Si precipitation reaction S15, and the filtrate S19 is a lithium leachate containing lithium. The solid-liquid separation S17 may use a sedimentation tank, a filter press, a screw filter, a centrifuge, and the like, or a combination of two or more of these may increase efficiency thereof. The solid S18 may be washed with clean water to minimize the loss of lithium, and then the wash water may be mixed with the filtrate S6 used in the Al and Si precipitation reaction S15 and reused.

The filtrate S19 separated through the solid-liquid separation S17 is mostly water and lithium hydroxide and contains less than 100 ppm of calcium (Ca²⁺), aluminum (Al(OH)₄⁻), and silicon (SiO₄²⁻) as impurities. To remove impurities in the filtrate S19, carbon dioxide S20 is injected. When the carbon dioxide S20 is injected into the filtrate S19, the calcium is precipitated as calcium carbonate. The precipitated calcium carbonate may be prepared by further performing solid-liquid separation, but the process may be skipped since it may be separated as a solid through solid-liquid separation S22 during evaporative concentration processes below.

### (6) Evaporative concentration process

Evaporative concentration processes S21, S24, and S26 are performed on the filtrate S19 from which impurities are precipitated. The evaporative concentration processes S21, S24, and S26 are processes for increasing lithium concentration of the filtrate S19 and precipitating and removing remaining impurities such as magnesium hydroxide and calcium carbonate, and preferably include a first evaporative concentration process S21, a second evaporative concentration process S24, and a third evaporative concentration process S26.

The first evaporative concentration process S21 involves performing reduced pressure evaporation on the filtrate S19 at 70 to 95 °C. The first evaporative concentration process S21 may also be performed under atmospheric pressure conditions of 100 °C, but in this case, it is important to purge nitrogen or argon gas to prevent contact between carbon dioxide and an evaporative concentrate.

The first evaporative concentration process S21 may preferably be continued from the point at which lithium hydroxide begins to precipitate until 0.5 to 5% of the total lithium hydroxide is precipitated. When the first evaporative concentration process S21 is terminated before 0.5% of lithium hydroxide precipitates, the removal rate of impurities including magnesium hydroxide and calcium carbonate is reduced, and when the concentration is continued beyond 5% precipitation, excessive lithium hydroxide precipitates along with impurities, requiring recycling to the process S6, thus decreasing process efficiency.

Solid-liquid separation S22 is performed on the lithium hydroxide concentrate prepared through the first evaporative concentration process S21. The above solid-liquid separation S22 is a process for separating magnesium hydroxide, calcium carbonate, and the like, which are impurities precipitated in the first evaporative concentration process S21, from the concentrate, and a portion of lithium hydroxide may be precipitated along with impurities. The solid-liquid separation S22 may use a sedimentation tank, a filter press, a screw filter, a centrifuge, and the like, or a combination of two or more of these may increase efficiency thereof.

A solid S23 obtained from the solid-liquid separation S22 is mixed with the filtrate S6 obtained from the solid-liquid separation S4 of the finely pulverized discarded sagger material and reused, thereby allowing for further recovery of lithium hydroxide contained in the impurities.

The second evaporative concentration process S24 is performed under the same conditions as the first evaporative concentration process on the filtrate obtained from the primary evaporative concentration process S21 and solid-liquid separation S22, and is performed until 50 to 80% of lithium hydroxide is precipitated in the filtrate. When the concentration is terminated before 50% of lithium hydroxide precipitates, the recovery rate of lithium hydroxide decreases, which increases process costs, and when the concentration is continued beyond 80% precipitation of lithium hydroxide, the recovered lithium hydroxide exhibits reduced purity. The concentrate on which the second evaporative concentration process S24 is performed undergoes solid-liquid separation S25 to separate lithium hydroxide as a solid 28 phase. The solid-liquid separation S25 may use a sedimentation tank, a filter press, a screw filter, a centrifuge, and the like, or a combination of two or more of these may increase efficiency thereof.

The third evaporative concentration process S26 is a process for maximizing the recovery rate of lithium hydroxide by further concentrating the filtrate from the second evaporative concentration process S24 and solid-liquid separation S25 and then reintroducing the filtrate into the evaporative concentration process. The third evaporative concentration process S26 is performed in the same manner as the first and second evaporative concentration processes S21 and S24, but is performed until 90 to 95% of the lithium hydroxide in the concentrate is precipitated. The solid produced through the third evaporative concentration process S26 is lithium hydroxide containing a small amount of the impurities, and is mixed with the filtrate S19 obtained from the solid-liquid separation S17 and dissolved after the Al and Si precipitation reaction S15 and then reintroduced into the first evaporative concentration process. The liquid produced through the third evaporative concentration process S26 contains a small amount of aluminum and silicon, and is removed by being injected into the Al and Si precipitation reaction S15. When the concentration is terminated before 90% of lithium hydroxide precipitates, process costs of the Al and Si precipitation reaction S15 increase, and when the concentration is continued beyond 95% precipitation of lithium hydroxide, the lithium hydroxide to be mixed with the filtrate S19 obtained from the solid-liquid separation S17 and dissolved after the Al and Si precipitation reaction S15 exhibits excessively reduced purity. The solid-liquid separation S27 is a process for separating lithium hydroxide produced in the third evaporative concentration process S26 from an aqueous solution. In general, a sedimentation tank, a filter press, a screw filter, a centrifuge, and the like may be used, or a combination of two or more of these may increase efficiency thereof. The series of concentration processes including the first, second, and third processes, may be performed in separate concentration tanks, or may be performed sequentially in one concentration tank.

### (7) Obtaining high-purity lithium hydroxide

The high-purity lithium hydroxide of the present invention is lithium hydroxide monohydrate having a purity of 99.9% or greater, and is prepared by washing and filtering S29 the solid S28 obtained from the solid-liquid separation S25 performed after the second evaporative concentration process S24 and drying S30 the obtained solid at 80 to 100 °C until the content of attached moisture reaches 1% or less. The washing and filtering S29 involves washing using a high-purity saturated lithium hydroxide solution and then filtering, and the process is repeated 3 times. The filtrate obtained through the three-time washing and filtration processes S29 is mixed with the filtrate S19 obtained from the solid-liquid separation S17 after the Al and Si precipitation reaction S15 and reintroduced into the first, second, and third evaporative concentration processes S21, S24, and S26.

The specific examples described herein are intended to represent preferred embodiments or examples of the present invention, and the scope of the present invention is not limited thereby. It is obvious to those skilled in the art that modifications and other uses of the present invention do not depart from the scope of the invention described in the claims of this specification.

The present invention has the advantage of recovering high-purity lithium hydroxide from a discarded sagger that is to be scrapped, by pulverizing the sagger and then recovering nickel oxide and cobalt oxide, which are positive electrode active materials, through wet magnetic separation, and removing impurities from the recovered nickel oxide and cobalt oxide through Al and Si precipitation reactions and evaporative concentration. Therefore, by using the method for recovering positive electrode active materials and lithium hydroxide from a discarded sagger according to the present invention, high value-added lithium and positive electrode active materials may be recovered and recycled from a discarded sagger that is scrapped during the manufacturing process of lithium secondary batteries, and thus the method is expected to reduce the manufacturing costs of lithium secondary batteries.

Although the method for recovering nickel, cobalt, and lithium from discarded sagger has been described with reference to the specific embodiments, it(they) is(are) not limited thereto. Therefore, it will be readily understood by those skilled in the art that various modifications and changes can be made thereto without departing from the spirit and scope of the present invention defined by the appended claims.

### INDUSTRIAL APPLICABILITY

Through a method for recovering a positive electrode active material and lithium hydroxide from a discarded sagger according to the present invention, high value-added lithium and positive electrode active materials may be recovered and reused from a discarded sagger discarded in the process of manufacturing lithium secondary batteries.

## Claims

1. A method for recovering a positive electrode active material and lithium hydroxide from a discarded sagger, the method comprising:
a first process of subjecting a discarded sagger to wet pulverization and subsequent solid-liquid separation;
a second process of subjecting a solid obtained from the solid-liquid separation to wet magnetic separation to recover a positive electrode active material; and
a third process of subjecting a filtrate obtained from the solid-liquid separation to Al and Si precipitation reactions and evaporative concentration to recover lithium hydroxide.

2. The method of claim 1, wherein the wet pulverization involves dry pulverizing the discarded sagger and then performing wet ball milling to obtain finely pulverized discarded sagger having a particle size of 200 mesh or less.

3. The method of claim 1, wherein the wet magnetic separation involves removing iron oxide and iron scale as magnetic materials through a first wet magnetic separation, and then performing a second wet magnetic separation on non-magnetic materials from the first wet magnetic separation, thereby recovering a positive electrode active material as a magnetic material.

4. The method of claim 1, wherein the Al and Si precipitation reactions involve mixing hydroxide of alkaline earth metal and gypsum with the filtrate obtained from the solid-liquid separation to precipitate soluble Al(OH)₄⁻ as insoluble ettringite and calcium aluminum silicate hydrate and precipitate soluble SiO₄²⁻ as insoluble calcium silicate hydrate.

5. The method of claim 1, wherein the evaporative concentration involves performing the evaporative concentration on the filtrate obtained from the Al and Si precipitation reactions and the subsequent solid-liquid separation of the filtrate obtained from the solid-liquid separation, thereby recovering lithium hydroxide.

6. The method of claim 5, wherein the lithium hydroxide has a purity of 99.9% or greater.
